# EUROPEAN PATENT APPLICATION

(11) **EP 2 135 923 A1**
(43) Date of publication of application: **23.12.2009**
(21) Application number: 08475011.6
(22) Date of filing: 08.12.2008
(51) Int. Cl.: C10G 1/10, C10G 9/00, C10G 45/38, C10G 69/06, C10L 1/06, C10L 1/08, C08J 11/10

(54) **Process for the production of motor fuels from polymer materials**

(30) Priority: 19.06.2008 SK 50592008
(71) Applicant: Bajus, Martin, 851 02 Bratislava (SK); Lexa, Ivan, 841 05 Bratislava (SK)
(72) Inventor: Bajus, Martin, 851 02 Bratislava (SK); Lexa, Ivan, 841 05 Bratislava (SK)
(74) Representative: Dolanska, Elena

(57) **Abstract**

A production process for motor fuels from polymer materials is described. The essence of the process consists of polymer materials that undergo thermal cracking at a temperature from 300 to 600 °C, at atmospheric pressure, which provides oil/waxes with boiling points from 30 to 450 °C containing saturated and unsaturated hydrocarbons with carbons numbered C₅ to C₃₀, wherein the oil/waxes after subsequent distillation from 30 to 180 °C under atmospheric pressure result in gasoline fractions containing saturated and unsaturated branched hydrocarbons with carbons numbered C₅ to C₁₁.

The atmospheric residuum after atmospheric distillation is further subjected to vacuum distillation at a pressure from 10 Pa to 100 kPa resulting in the separation of diesel fuel fractions at a temperature from 150 to 360 °C containing saturated hydrocarbons with carbons numbered C₉ to C₂₂ from the vacuum residuum containing saturated and unsaturated hydrocarbons with carbons numbered above C₂₂. Gasoline obtained from the atmospheric distillation of oil/waxes and diesel fuel obtained from the vacuum distillation of oil/waxes may both be further refined by hydrogenation using a heterogeneous catalyst with a metal hydrogenating element at a temperature from 50 to 150 °C at a pressure of 1 to 3 MPa for 0.5 to 4 hours in the presence of a low boiling alkane hydrocarbon solvent.

## Description

### Technical area

This invention relates to a process for the production of motor fuels from polymer materials. The problem belongs to the area motor fuel production, namely automotive gasoline for ignition motors and diesel fuel for diesel motors from alternative sources: polymer materials, located in industrial and municipal waste. The invention belongs to the field of large-scale refinery production of quality automobile gasoline, diesel fuels and heating oils.

### Current technical situation

With the increase in the ability to recycle municipal and industrial waste, a modern question has developed around what can we expect from certain products. Thermal processes must be included among the attractive basic recycling technology for polymers for which thermal cracking and pyrolysis enable the conversion of polymer materials into monomers, fuels and other valuable products.

In the development of plastic recycling technology for liquefaction of polymers into fuels via thermal cracking, the quality of the materials used is of the highest importance. Currently, the characterization of liquid fuels from various sources is generally based on the evaluation methods and standards used in testing oil products. The characteristics of liquid fuels derived from plastics are usually similar to conventional oil based fuels (gross caloric value, viscosity, density, octane and cetane number, distillation curve, etc.) [J. Scheirs and W. Kaminsky (Eds), Feedstock Recycling and Pyrolysis of Waste Plastics, John Wiley and Sons, Ltd., New York, 2006, pp. 785.] Up till now, product analysis from thermal cracking of polyethylene (LDPE), polypropylene (PP) and their mixture (LDPE/PP) has used high-resolution gas chromatography - mass spectroscopy analysis.

The understanding of the radical cracking mechanism of decomposition brings the conclusion that polyethylene cannot provide branched hydrocarbons via thermal cracking alone. As a result it can be expected that the octane number from thermal cracking of polyethylene will be low. Following the above-cited monograph, gasoline from the thermal cracking of LDPE has a research octane number of 20 units. Opposed to this, unspecified polyethylene provides gasoline with a research octane number of 80.9. Diesel fuel from HDPE thermal cracking has a cetane index of 58.2.

Differences in the polymer structure of polyethylene and polypropylene are reflected in the composition of liquid products from thermal cracking. The isoalkane structure should result in a higher octane number in the obtained gasoline. Thermal cracking of polypropylene results in a liquid product that boils up to 150° C with a research octane number of 53. An increase in the octane level corresponds to an increased level of aromatic hydrocarbons. Gasoline obtained from thermal cracking of polystyrene results in a research octane number up to 106.8. Currently, the presence of aromatic hydrocarbons in automotive gasoline is not desirable and is limited by EU standards. European standards for automotive gasoline allow a maximum level of 35% of aromatics (by weight) from which benzene may form less than 1%. Catalytic conversion on zeolite catalysts (REY - rare earth metal-exchanged Y type) of unspecified polyethylene results in a gasoline fraction with a research octane number of 75 to 100, from which aromatics make up 40% (by weight). Direct HDPE catalytic pyrolysis in the presence of a zeolite catalyst provides gasoline with a higher amount of aromatics (62.7% monoaromatics, 9.7% polyaromatics). The presence of aromatics in gasoline as an octane carrier is undesirable.

A further characteristic quality of gasoline and diesel fuel from thermal cracking of plastics is that they are unsaturated. According to the presented monograph, the bromine number for gasoline from polyethylene has a value of 35.4 and from the polyethylene and polypropylene mixture, 21.9 g Br₂/100g. The bromine number for diesel obtained through the cracking of PE alone was 20.5 and for the PE - PP blends, 14.0 g Br₂/100g. Diesel fuels obtained from the thermal cracking of the PE+PP+PS mixture resulted in a bromine number of 88.5 g Br₂/100g of sample. In comparison to the results with a view towards the unsaturation of both diesel fuels, the reason for such a difference in the bromine number is not clear.

Known data regarding fuels used and insufficiencies in motor fuel production from polymer materials are removed following this invention, the goal of which is to prepare ecological and quality motor fuels. As opposed to the research efforts in literature, there exists very little data regarding processes for the production of gasoline and diesel fuel resulting from thermal and catalytic cracking of plastics. Data regarding the octane number of gasoline and the cetane number (index) of diesel fuel is missing. Data concerning the stability of such fuels is also scarce. When the cracking products are unsaturated, it is important to characterize their bromine number. It is also very important to know the possibilities of influencing the fuels at the individual fractions from the view of their structure when sent for thermal cracking. This is why it is necessary to study the decomposition of the individual types of polyethylene and polypropylene as well as their mixtures and to search for the basic polyalkenes, mainly polypropylenes (PP), that provide branched hydrocarbons with a high octane number. At the same time, optimize the thermal cracking of polyalkenes for gasoline and diesel fuels so that their aromatic content is the lowest possible and monitor to what level the hydrorefining process can improve the quality of gasoline and diesel fuel.

### Principle of the invention

The basis of this invention is a process for the production of motor fuels from polymer materials from industrial or municipal trash sources turning it into sulphur free, nonaromatic and ecological fuel via chemical recycling to replace fossil fuels mainly from oil sources. The key step is the liquefaction of polymer materials to oil/waxes that can be distilled to provide gasoline, diesel fuels and heating oils that can be used directly or after hydrorefining.

Following this process, individual polymer materials and/or mixed polymers are first subjected to thermal cracking at a temperature of 300 to 600 °C, preferably at a temperature from 430 to 500 °C at atmospheric pressure resulting in the formation of oil/waxes with a boiling point of 30 to 450 °C containing saturated and unsaturated hydrocarbons with carbons numbered C₅ to C₃₀ of an unsaturated character. These oil/waxes are predominantly linear and branched alkenes and alkanes C₅ to C₃₀ represented in parity (1:1) with predomination of 1-alkenes, a minimum representation of aromatics (below 1%) and without the presence of sulphur compounds. From the formed oil/waxes, under atmospheric pressure, gasoline is separated within the temperature range from 30 to 180 °C containing saturated and unsaturated branched hydrocarbons C₅ to C₁₁ with a research octane number from 75 to 110 octane units. Following atmospheric distillation, the residuum from atmospheric distillation undergoes vacuum distillation under pressure from 10 Pa to 100 kPa from which diesel fuel with a boiling point of 150 to 360 °C is received with alkane and alkene hydrocarbons C₉ to C₂₂ having a Diesel Index from 60 to 85. Vacuum residuum containing hydrocarbons above C₂₂ is perfect for use as sulphur-free heating oils. They can be used alone or with the addition of oil fractions or liquid products resulting from the thermal cracking of used tires as a component for heating oils.

Gasoline resulting from the atmospheric distillation of oil/waxes and diesel fuels resulting from vacuum distillation of oil/waxes can be further refined using hydrogenation over a heterogeneous catalyst with a hydrogenation element at a temperature from 50 to 150 °C and a pressure from 1 to 3 MPa for 0.5 to 4 hours so that original gasoline results in a hydrogenated gasoline with a bromine number of 0.02 to 1.2 g Br₂/100g of gasoline with a research octane number from 50 to 105 octane units and from original diesel fuels, a resulting hydrogenated diesel fuel with a Diesel Index from 90 to 105 with a bromine number of 0.05 to 0.60 g Br₂/100g of diesel fuel.

The heterogeneous catalyst can be any metal from the 8th group of the periodic table -Fe, Co, Ni, Ru, Rh, Os, Ir and Pt - present in the carrier in the total amount of 1-5% (by weight). Palladium on activated carbon is the best. The heterogeneous catalyst may also be oxides and sulphides of Co - Mo and Ni - Mo applied on alumina, silica, alumina-silicates or activated carbon.

It is beneficial that hydrogenation occurs in a low-boiling hydrocarbon alkane solvent selected from the group of heptane and pentane.

The process of producing motor fuels from polymer materials according to the explained solution constitutes an original technology used for the production of high-octane gasoline from waste plastics. For example, gasoline from the oil/waxes derived from polypropylene is obtained with a research octane number of 101.5 octane units and hydrogenated diesel fuel with excellent combustion characteristics (DI = 95 to 105).
The unsaturation of oil/waxes from individual polyethylenes is comparable with a bromine number around 50 g Br₂/100g of sample; oil/waxes from polypropylene have a bromine number nearly twice that around 100 g Br₂/100g of sample, and that have a research octane number above 100.

In addition, unsaturation is an important characteristic in the obtained oil/waxes; their excellent solubility in hydrocarbon and oil fractions enables high flexibility in their further refinery and petrochemical processing.

An advantage of the production process following this invention is, apart from technical simplicity, the ability to use standard atmospheric and vacuum distilling to separate the obtained oil/waxes. The distilled fraction achieved under atmospheric pressure to a temperature of 180 °C relates to gasoline. The fraction distilled under vacuum is classified as diesel fuel.
Hydrogenation of gasoline and diesel fuel on a hydrogenating heterogeneous catalyst at 50 - 150 °C, at a pressure from 1 to 3 MPa results in practically saturated fuel (bromine number from 0.02 - 1.2 g Br₂/100g of sample).

Gasoline resulting from thermal cracking of polymer materials from the submitted invention has a low content of aromatic hydrocarbons. With respect to the octane number and gasoline composition, the best gasoline from thermal cracking results from polypropylene, either original or hydrogenated. Research octane numbers are around 101 units and at the same time they contain practically no aromatic hydrocarbons. The octane number of gasoline from polyethylenes is around 82-83 units. Hydrogenated 1-alkenes present in gasoline from polyethylenes alters the research octane number, whereas the research octane number in gasoline from oil/waxes from polypropylene is not changed by hydrogenation.

The Diesel Index of original (DI = 73.7 - 75.6) and hydrogenated diesel fuels (DI = 98.2 - 104.9) speaks to their excellent combustion characteristics. Hydrogenation increases the Diesel Index and is reflected in a drop in the bromine number for diesel fuels obtained from different base oil/waxes (plastics).

In comparison with standard gasoline and diesel fuels produced from oil, the gasoline and diesel fuels obtained from the process presented in this invention contain practically no sulphur compounds and only a minimal amount of aromatic hydrocarbons (below 1 %). They are a quality replacement for standard automotive gasoline and diesel fuel.

The process following this invention is neither an energy nor material intensive process. The chemical recycling of plastic waste protects the natural environment and can produce a quality hydrocarbon fuel such as gasoline or diesel fuel. They can take the place of fossil fuels, mainly oils that many countries have to import from abroad.

Further data regarding the production process for gasoline and diesel fuel from polymer materials, including further benefits are certainly to be added to this topic and are certainly not limited by the scope of this invention.

### Completed invention examples

### Example 1

### A. Oil/wax preparation

Feedstock polymer materials with the following characteristics were used:
- High density polyethylene HDPE (M_{w} = 33 800; M_{w} =6 950, ρ = 950 kg.m⁻³)
- Low density polyethylene LDPE (M_{w} = 292 000; M_{w} = 22 000, ρ = 919 kg.m⁻³)
- Linear low density polyethylene LLDPE (M_{w} = 112 110; M_{w} = 33 300, ρ = 919 kg_{.}m⁻³)
- Polypropylene PP (M_{w} = 200 000; M_{w} = 65 000, ρ = 903 kg.m⁻³)
These are virgin plastic materials. Average pellet size fluctuated around 3.3 to 4.4 mm.

Oil/waxes were prepared by thermal cracking of the individual plastics (HDPE, LDPE, LLDPE and PP) and mixed polymers: a dual mixture LDPE/PP (1:1 by weight), a triple mixture HDPE/LDPE/PP (1:1:1 by weight) and a quadruple mixture HDPE/LDPE/LLDPE/PP (1:1:1:1 by weight). The thermal cracking of the plastics begins around 450 °C in a nitrogen atmosphere. As an example, the thermal cracking of granulated PP, mass of 17g, in the course of 80 minutes to a temperature of 450 °C. In Table 1, the separated oil/waxes from nine experiments are shown.

Thermal cracking of PP was completed in the presence of nitrogen fed at a constant speed of 50 ml/min. The following temperature program was used for thermal cracking:
• Heating from 16.5 °C/min. to 350 °C
• 8 minutes fixed temperature
• Heating from 9 °C/min. to 440 °C
• 4 minutes fixed temperature
• Heating from 7.5 °C/min. to 480 °C

**Table 1**

| Oil/wax formation during thermal cracking of PP at 450 °C | | |
|---|---|---|
| Experiment | Oil/wax mass (g) | Yield (%) |
| 1. | 14.43 | 84.49 |
| 2. | 14.91 | 87.71 |
| 3. | 14.68 | 86.35 |
| 4. | 14.83 | 87.24 |
| 5. | 11.48 | 67.53 |
| 6. | 14.85 | 87.35 |
| 7. | 14.45 | 85.50 |
| 8. | 14.88 | 87.53 |
| 9. | 15.06 | 88.59 |
| Average value | 14.40 | 84.64 |

The entire experiment took 80 minutes. After pyrolysis completion, the evaluation of oil/wax yields fluctuated from 67 to 88%.

Obtained oil/waxes are liquid and have a yellow color. Linear or branched alkenes and alkanes C₅ - C₃₀ predominated in the oil/waxes. The bromine numbers of the oil/waxes are shown in Table 2. Unfortunately, while the unsaturation of oil/waxes from individual polyethylenes were comparable (∼ 50): the oil/waxes from polypropylene had a bromine number nearly twice this level (∼ 100).
In addition unsaturation is an important characteristic in the obtained oil/waxes; their excellent solubility in hydrocarbon and oil fractions enables high flexibility in their further refining and petrochemical processing.

**Table 2**

| Unsaturation of oil/waxes from thermal cracking of polymers at 450 °C | |
|---|---|
| Feedstock | Bromine Number (g Br₂/100g of sample) |
| LDPE | 50.1 |
| HDPE | 49.8 |
| LLDPE | 47.5 |
| PP | 101.4 |
| LDPE+PP | 64.7 |
| HDPE+LDPE+PP | 57.0 |
| HDPE+LDPE+LLDPE+PP | 58.6 |

Similar results were achieved using thermal cracking of plastics at temperatures from 430 to 500 °C. Thermal cracking at temperatures below 430 °C produced oil/waxes that had representative hydrocarbon distillate largely comparable to diesel fuels; at higher temperatures (over 500 °C) they contained more hydrocarbons in gasoline fractions. Changes in temperature may proportionately change the ratio of gasoline towards diesel fuel. This significantly increases the flexibility of the process according to the invention.

### B. Preparation of gasoline and diesel fuel from oil/waxes

The oil/waxes from the thermal cracking of individual and mixed polymer materials are then separated by distillation. First, distillation takes place at atmospheric pressure and then followed by vacuum distillation. In atmospheric distillation, the oil/waxes are distilled into fractions using distillation temperatures from 37 to 182 °C, which generally relates to the distillation of gasoline. The residuum from distillation at atmospheric pressure continues on to vacuum distillation.

In vacuum distillation, the hydrocarbon fractions related to the range of diesel fuels are distilled. This range is achieved at temperatures from 180 to 330 °C under atmospheric pressure. Fractions with a boiling point from 180 °C to 330 °C are suitable for distillation again at a lower pressure that results in a corresponding decrease in the distillation temperature. The vacuum pressure was 13 mm Hg, corresponding to a pressure of 1733.2 Pa. At the shown pressure, distillation occurred from 90 to 184 °C. The maximum temperature of the heating media (silicon oil) was 250 °C. Vacuum distillation, the same as atmospheric, was conducted in a nitrogen-protected atmosphere.

After distillation, the mass of the first (atmospheric) and second (vacuum) distillate and the mass of the distillation residuum were all weighed and the material balance of distillation was then calculated. The results are shown in Table 3.

**Table 3**

| The material balance of distillation of oil/waxes | | | | | | | | |
|---|---|---|---|---|---|---|---|---|
| | Oil/wax | Gasoline | | Diesel fuel | | Residuum | | Loss |
| from | Input (g) | Distillate (g) | Yield (%) | Distillate (g) | Yield (%) | Mass (g) | Yield (%) | (%) |
| LDPE | 42.35 | 10.83 | 25.57 | 14.80 | 34.94 | 15.36 | 36.27 | 3.22 |
| HDPE | 42.13 | 8.91 | 21.15 | 14.64 | 34.75 | 16.03 | 38.05 | 6.05 |
| LLDPE | 41.96 | 11.94 | 28.45 | 11.83 | 28.19 | 15.96 | 38.04 | 5.32 |
| PP | 40.93 | 16.76 | 40.95 | 12.03 | 29.40 | 11.78 | 28.78 | 0.87 |
| LDPE/PP | 41.27 | 14.47 | 35.06 | 12.16 | 29.46 | 12.95 | 31.38 | 4.10 |
| Mixture A | 40.92 | 15.51 | 37.90 | 10.16 | 24.83 | 14.01 | 34.24 | 3.03 |
| Mixture B | 39.38 | 16.91 | 42.94 | 9.64 | 24.48 | 11.44 | 29.05 | 3.53 |

| | | | | | | | | |
|---|---|---|---|---|---|---|---|---|
| Mixture A - HDPE/LDPE/PP Mixture B - HDPE/LDPE/PP/LLDPE | | | | | | | | |

It is clear from the material balance of atmospheric and vacuum distillation (Table 3) that the largest gasoline yield was obtained from the thermal cracking of the quadruple mixture of polymers (43%), as well as for polypropylene by itself (41%). In the case of diesel fuels, the largest yields were found in the vacuum distillation oil/waxes from LDPE and HDPE thermal cracking (around 35%). The composition of raw materials influences not only the materials balance of the thermal process but also the characteristics of the obtained gasoline and diesel fuels.

The octane number characterizes the detonation characteristics of automotive gasoline. Gasoline octane numbers are shown in Table 4.

**Tab. 4**

| Octane numbers for original gasoline obtained from polymer thermal cracking | |
|---|---|
| Oil/waxes | Original gasoline |
| LDPE | 83.2 |
| HDPE | 81.6 |
| LLDPE | 81.7 |
| PP | 101.5 |
| LDPE + PP | 88.3 |
| Triple mixture | 85.3 |
| Quadruple mixture | 87.8 |

| | |
|---|---|
| Triple mixture - HDPE + LDPE + PP Quadruple mixture - HDPE + LDPE + LLDPE + PP | |

The octane number for gasoline from polyethylenes (LDPE, HDPE, LDPE) is at the level of 82-83 units. The highest research octane number is for gasoline from the thermal cracking of polypropylene with 101.5 units. Gasoline obtained from the simulated polymer mixtures had research octane numbers from 85 to 88 units. The high octane number for gasoline obtained from the thermal cracking of polypropylene is the result of its branched structure. With an increase in the methyl groups in the hydrocarbon, the octane number also increases. N-alkanes from C5 and higher are a low octane component of gasoline. Conversely, isoalkanes, mainly polymethylated, are one of the most valuable components. Alkenes with identical carbon chains have higher octane numbers than n-alkanes and lower than isoalkanes. For gasoline obtained from polyethylene, 1-alkenes are the main carriers for the octane level (Table 5).

**Table 5**

| Gasoline composition from thermal cracking of LLDPE | |
|---|---|
| Component | Mass % |
| Unidentified to C₅ | 0.04 |
| 1-pentene | 0.12 |
| n-pentane | 0.17 |
| Unidentified C₅ to C₆ | 0.22 |
| 1-hexene | 2.02 |
| n-hexane | 1.08 |
| Benzene | 0.49 |
| Unidentified C₆ to C₇ | 1.05 |
| 1-heptene | 3.38 |
| n-heptane | 3.08 |
| Toluene | 0.29 |
| Unidentified C₇ to C₈ | 4.73 |
| 1-octene | 4.16 |
| n-octane | 3.90 |
| Unidentified C₈ to C₉ | 5.89 |
| 1-nonene | 4.94 |
| n-nonane | 4.10 |
| Unidentified C₉ to C₁₀ | 5.79 |
| 1-decene | 7.04 |
| n-decane | 4.89 |
| 1-undecene | 5.04 |
| n-undecane | 6.19 |
| Unidentified C₁₁ to C₁₂ | 5.44 |
| 1-dodecene | 4.23 |
| n-dodecane | 4.58 |
| Unidentified C₁₂ to C₁₃ | 3.81 |
| 1-tridecene | 2.89 |
| n-tridecane | 2.39 |
| Unidentified C₁₃ to C₁₄ | 2.27 |
| 1-tetradecene | 1.53 |
| n-tetradecane | 1.20 |
| Unidentified C₁₄ to C₁₅ | 1.03 |
| 1-pentadecene | 0.33 |
| n-pentadecane | 0.50 |
| 1-hexadecene | 0.47 |
| n-hexadecane | 0.19 |
| 1-heptadecene | 0.20 |
| n-heptadecane | 0.09 |
| 1-octadecene | 0.11 |

The presence of unsaturated hydrocarbons is reflected in the high bromine number in gasoline obtained by distillation, as shown in Table 6.

**Table 6**

| Bromine number of original gasoline obtained by distillation (g Br₂/100g gasoline) | |
|---|---|
| Oil/wax | Original gasoline |
| LDPE | 83.4 |
| HDPE | 89.3 |
| LLDPE | 73.2 |
| PP | 101.4 |
| LDPE+PP | 100.0 |
| LDPE+HDPE+PP | 90.6 |
| LDPE+HDPE+LLDPE+PP | 87.4 |

It is important to note that the gasoline obtained from polyalkene thermal cracking has low aromatic hydrocarbon content. With a view toward aromatic hydrocarbon content, the gasoline obtained by the thermal cracking of polymer plastics is better in this respect to gasoline obtained by catalytic cracking. With respect to the octane number and gasoline composition, the best gasoline was achieved from the thermal cracking of polypropylene, either original or hydrogenated. Research octane numbers fluctuated around 101 units and at the same time contained nearly no aromatic hydrocarbons.

The combustion characteristics of diesel fuel are expressed by its cetane number. With a view towards the expensive and time consuming process of engine standard method, laboratory indicators are regularly used to measure the cetane number. This is the same for the Diesel Index. The Diesel Index for original (DI = 73.7 - 75.6) diesel fuels (Table 7) speaks to their excellent combustion characteristics. This is observed to be true in spite of the fact that the Diesel Index does not have the same impact for diesel fuels as the octane number has for gasoline.

**Table 7**

| Diesel Indexes for original diesel fuels from polymer thermal cracking | |
|---|---|
| Oil/waxes | Original diesel fuel |
| LDPE | 74.4 |
| HDPE | 75.3 |
| LLDPE | 75.6 |
| PP | 75.5 |
| LDPE + PP | 73.7 |
| Triple mixture | 74.5 |
| Quadruple mixture | 74.2 |

From Table 8 it is clear that the bromine number for unsaturated diesel fuels from polyethylene is lower (52-54g Br₂/100g of sample) as that in the case for the liquid fractions obtained from polypropylene (72,2g Br₂/100g of sample). The unsaturated diesel fuel obtained from polyethylene is representative of the presence of 1-alkenes in near parity to the represented n-alkanes.

**Table 8**

| Bromine number for original diesel fuel obtained by distillation (g Br₂/100g of sample) | | |
|---|---|---|
| Oil/wax | Original diesel fuel | Distillation residuum |
| LDPE | 52.5 | 26.5 |
| HDPE | 54.0 | 26.0 |
| LLDPE | 51.8 | 28.7 |
| PP | 72.2 | 45.8 |
| LDPE+PP | 78.0 | 45.6 |
| LDPE+HDPE+PP | 57.1 | 34.8 |
| LDPE+HDPE+LLDPE+PP | 53.3 | 33.3 |

### Example 2

Gasoline and diesel fuel obtained by the process shown in Example 1 were submitted to hydrogenation. The feedstock reactive mixture containing the appropriate fuels from thermal cracking of plastics after distillation were hydrogenated in the presence of a catalyst and solvent in the required molar ratio. The weighed raw material, catalyst and solvent contents and reaction conditions are shown in Table 9. Palladium on activated carbon in a 5% mass concentration was used as the catalyst. Hydrogenation occurred under a pressure of 2 MPa and mixing occurred at the reaction temperature. The goal of hydrogenation was to lower the alkene content in individual fuels.

**Table 9**

| Hydrogenation conditions for individual samples | | | | | | | | |
|---|---|---|---|---|---|---|---|---|
| Sample | Fraction | m sample (g) | m catalyst (g) | Solvent | Vₛₒₗᵥ (ml) | Reaction time (h) | Reaction H₂ temp. (°C) | consumption (kPa) |
| LDPE | 1. | 2.2785 | 0.1196 | heptane | 30 | 3.5 | 80-120 | 101.325 |
| | 2. | 5.5306 | 0.2918 | | | 3 | | 303.975 |
| HDPE | 1. | 3.5288 | 0.1875 | pentane | 40 | 3 | 80-120 | 151.99 |
| | 2. | 4.6418 | 0.2243 | | - | 2 | | 101.325 |
| LLDPE | 1. | 5.2702 | 0.2774 | pentane | 30 | 3 | 80-120 | 303.975 |
| | 2. | 4.6801 | 0.2340 | | 40 | | | 101.325 |
| PP | 1. | 35.5 | 1.8 | none | - | 2 | 80-130 | - |
| | 2. | 15.9 | 0.8 | | | 1 | | |
| LDPE+ | 1. | 5.0926 | 0.2680 | heptane | 30 | 3 | 80-120 | 101.325 |
| PP | 2. | 2.2749 | 0.1192 | | | | | |
| Triple | 1. | 3.8782 | 0.2041 | pentane | 30 | 3 | 80-120 | 303.975 |
| mixture | 2. | 2.3585 | 0.1241 | | 40 | | | 101.325 |
| Quadruple | 1. | 4.8519 | 0.2554 | pentane | 40 | 3 | 80-120 | 202.65 |
| mixture | 2. | 2.8176 | 0.1483 | | | | | 101.325 |

| | | | | | | | | |
|---|---|---|---|---|---|---|---|---|
| Notes for Table 9: Triple mixture - HDPE+LDPE+PP Quadruple mixture - HDPE+LDPE+LLDPE+PP 1. fraction = gasoline 2. fraction = diesel fuel | | | | | | | | |

Hydrogenated samples were diluted by solvent (pentane, heptane). So that the exact composition of hydrogenated gasoline and diesel fuel could be determined, as well as other characteristics, any excessive amounts of solvent was removed by the evaporation in a rotary vacuum evaporator.

Among heterogeneous catalysts suitable for hydrogenating gasoline and diesel fuels the 8th group metals of the periodic table are appropriate -Fe, Co, Ni, Ru, Rh, Os, Ir, Pt - present on the carrier in the total amount of 1-5% mass. Also appropriate are the oxides and sulphides of Co - Mo and Ni - Mo applied on alumina, silica, alumina-silicate or activated carbon.

Hydrogenation of 1-alkenes present in gasoline from polyethylene lowered their research octane number (Table 10). This was not the case for gasoline obtained from thermal cracking of PP (Research octane number 101.4) as hydrogenation did not lower their octane level. The octane number did not substantially change as long as the saturated hydrocarbon chains were the same length without regard for the location of their double bond or molecule size. Olefin gasoline belongs among the sensitive fuels and has a very high blending octane number. Hydrogenation increases the oxidation stability of unsaturated gasoline.

**Table 10**

| Hydrogenated gasoline octane number from polymer thermal cracking | |
|---|---|
| Oil/wax | Hydrogenated gasoline |
| LDPE | 71.0 |
| HDPE | 60.6 |
| LLDPE | 68.5 |
| PP | 101.4 |
| LDPE + PP | 84.7 |
| Triple mixture | 84.9 |
| Quadruple mixture | 84.3 |

| | |
|---|---|
| Triple mixture - HDPE+LDPE+PP Quadruple mixture - HDPE+LDPE+LLDPE+PP | |

Hydrorefining of unsaturated hydrocarbons reduce the bromine number of hydrogenated gasoline and as a result, increases its stability in storage (Table 11). Hydrogenated gasoline has a bromine number between 0.5 and 1.2 g Br₂/100g of gasoline.

**Table 11**

| Bromine numbers of hydrogenated gasoline (g Br₂/100 g of sample) | |
|---|---|
| Oil/waxes | Hydrogenated gasoline |
| LDPE | 1.2 |
| HDPE | 0.021 |
| LLDPE | 0.52 |
| PP | 0.14 |
| LDPE+PP | 0.23 |
| LDPE+HDPE+PP | 0.64 |
| LDPE+HDPE+LLDPE+PP | 0.069 |

The Diesel Index of diesel fuels by hydrogenation increased by about 25 units (Table 12). The increase in the Diesel Index by hydrogenation is reflected in a decrease in the bromine number of diesel fuel from various feedstock plastics (Table 13).

**Table 12**

| Diesel Index of hydrogenated diesel fuels from polymer thermal cracking | |
|---|---|
| Oil/waxes | Hydrogenated diesel fuel |
| LDPE | 102.5 |
| HDPE | 98.2 |
| LLDPE | 99.9 |
| PP | 104.9 |
| LDPE+PP | 104.3 |
| Triple mixture | 102.3 |
| Quadruple mixture | 102.2 |

Hydrogenation of 1-alkenes from polyethylene thermal cracking as well as branched alkenes from polypropylene thermal cracking produces saturated hydrocarbons that are excellent components of diesel fuel. From the results it is clear that these determine the chemical composition of diesel fuel. When diesel fuel contains more hydrocarbons with longer alkyl groups, the better the diesel fuel becomes. Alkanes have the best combustion characteristics. Alkenes are considered similarly valuable but these are consistently less stable. The lack or low levels of alkyl aromatics in the obtained diesel fuel only confirms this. Aromatic (polyaromatic) hydrocarbons in diesel fuel are undesirable. They have a large ignition delay and are not completely combusted (resulting in smoke, carbon, particulate matter (PM)). Equally important is the lack of sulphur content in the fuel but not because they have an impact on combustion but rather because of the corrosive effects of their waste gases and their impact on lubricating oils. Sulphur content encourages the formation of solid particles (PM).

Achieved results from the area of combustion characteristics for obtained diesel fuels including the Diesel Index speak to their excellent quality.

**Table 13**

| Bromine number of hydrogenated diesel fuel and distilled residue | | |
|---|---|---|
| Oil/waxes | Hydrogenated Diesel Fuel | Distilled Residuum |
| LDPE | 0.14 | 26.5 |
| HDPE | 0.08 | 26.0 |
| LLDPE | 0.04 | 28.7 |
| PP | 0.10 | 45.8 |
| LDPE+PP | 0.25 | 45.6 |
| LDPE+HDPE+PP | 0.59 | 34.8 |
| LDPE+HDPE+LLDPE+PP | 0.53 | 33.3 |

The residuum from vacuum distillation had relatively the lowest level of unsaturation. Bromine numbers fluctuated from 26 to 46 g Br₂/100g of sample. It can be used alone, or added to oil fractions or liquid products from the thermal cracking of used tires as a component of heating oils.

### Industrial applications

The production process for motor fuels from polymer materials as described in this invention can be applied to small and large-scale energy operations. It enables flexible use be it in a smaller facility equipped for annual production to 20,000 tons located in a greenfield development or a high capacity facility already used for oil refinery processes.

## Claims

1. This production process for motor fuels from polymer materials is significant in that individual polymer materials resulting from industrial processes and/or mixed polymer materials from municipal waste undergo thermal cracking at a temperature from 300 to 600 °C, at atmospheric pressure, which provides oil/waxes with boiling points from 30 to 450 °C containing saturated and unsaturated hydrocarbons with carbons numbered C₅ to C₃₀, wherein the oil/waxes after subsequent distillation from 30 to 180 °C under atmospheric pressure result in gasoline fractions containing saturated and unsaturated branched hydrocarbons with carbons numbered C₅ to C₁₁, and the atmospheric residuum is then processed further under vacuum distillation at a pressure of 10 Pa to 100 kPa resulting in the separation of diesel fuel fractions at a temperature from 150 to 360 °C containing saturated hydrocarbons with carbons numbered C₉ to C₂₂ from the vacuum residuum containing saturated and unsaturated hydrocarbons with carbons numbered above C₂₂.

2. A production process for motor fuels from polymer materials to Claim 1, wherein the thermal cracking preferably occurs at a temperature from 430 to 500 °C.

3. A production process for motor fuels from polymer materials to Claim 1 and Claim 2, wherein that the distilled gasoline as a result of atmospheric distillation of oil/waxes undergoes hydrogenation using a heterogeneous catalyst with a hydrogenation element at a temperature from 50 to 150 °C and pressure from 1 to 3 MPa in the presence of hydrogen for 0.5 to 4 hours.

4. A production process for motor fuels from polymer materials to Claim 1 and Claim 2, wherein the distilled diesel fuel as a result of vacuum distillation of oil/waxes undergoes hydrogenation using a heterogeneous catalyst with a hydrogenation element at a temperature from 50 to 150 °C and pressure from 1 to 3 MPa in the presence of hydrogen for 0.5 to 4 hours.

5. A production process for motor fuels from polymer materials to Claim 3 or 4, wherein the heterogeneous catalyst in the hydrogenation process is a metal selected from the metals of the 8th group of periodic table elements composed of Fe, Co, Ni, Rb, Rh, Os, Ir and Pt present in the carrier in the amount of 1-5% of the mass.

6. A production process for motor fuels from polymer materials to Claim 3 or 4, wherein is significant in that the heterogeneous catalysts in the hydrogenation process are oxides and sulphides of Co - Mo and Ni - Mo applied on alumina, silica, alumina-silicate or activated carbon.

7. A production process for motor fuels from polymer materials to Claim 3 through 6, wherein the hydrogenation occurs in a low boiling alkane hydrocarbon solvent selected from the group of pentane and heptane.
